# EUROPÄISCHE PATENTANMELDUNG

(11) **EP 0 864 998 A2**
(43) Veröffentlichungstag der Anmeldung: **16.09.1998**
(21) Anmeldenummer: 98104374.8
(22) Anmeldetag: 11.03.1998
(51) Int. Cl.: G06K 19/077

(54) **Steckkarte für elektronische Geräte**

(30) Priorität: 13.03.1997 DE 19710513
(71) Anmelder: ITT MANUFACTURING ENTERPRISES, INC., Wilmington, Delaware 19801 (US)
(72) Erfinder: Schremmer, Andreas, 73614 Schorndorf (DE); Biermann, Werner, 73650 Winterbach (DE); Schmid, Roland, 70794 Filderstadt (DE)
(74) Vertreter: Dreiss, Fuhlendorf, Steimle & Becker, Patentanwälte

(57) **Zusammenfassung**

Eine Steckkarte (10) für elektronische Geräte, in etwa länglich rechteckiger, flacher Form, ist mit einem zwei halbschalenartig ausgebildete Gehäuseteile (12, 13) aufweisenden Gehäuse (11), mit einer im Gehäuse (11) aufgenommenen Leiterplatte (16) und mit einem an einem der oder beiden Querenden der Leiterplatte (16) gehaltenen Steckverbinder (17), der die Stirnseitenöffnung des Gehäuses (11) abdeckt und die Gehäuseteile (12, 13) auf Abstand hält, versehen. Dabei ist der Steckverbinder (17) durch getrennte Bauteile in Form mindestens eines an der Leiterplatte (16) gehaltenen Steckbauteils (18) und eines das Steckbauteil (18) formschlüssig haltenden, elektrisch isolierenden Sattelbauteils (19) gebildet, dessen dem Haltebereich (26) für das Steckbauteil (18) abgewandter Fixierbereich (27) an einem der Gehäuseteile (12, 13) ortsfest gehalten ist. Auf diese Weise ist bei einer Steckkarte für elektronische Geräte ein vereinfachter Steckverbinder für die Steckkartenstirnseite geschaffen.

## Beschreibung

Die vorliegende Erfindung bezieht sich auf eine Steckkarte für elektronische Geräte nach dem Oberbegriff des Anspruchs 1.

Bei bekannten Steckkarten dieser Art, wie sie bspw. aus der DE 44 06 644 A1 bekannt sind, ist der Steckverbinder als integrales Bauteil ausgebildet, d.h., der bspw. 68-polige Steckverbinder besitzt eine mit Anschlussfahnen versehene Steckerbuchsenanordnung, die in einen Isolationsformstoffkörper eingegossen ist. Dieser einheitliche Steckverbinder ist an der Leiterplatte befestigt und über die gesamte Gehäusebreite zwischen den Gehäuseteilen aufgenommen und dort in axialer Richtung ortsfest gehalten. Für die Montage der Steckkarte wird das betreffende Ende der Leiterplatte auf den einstückigen Steckverbinder gelegt und dann durch einen Lötofen gebracht, um die Anschlussfahnen des Steckverbinders mit den betreffenden Anschlüssen der Leiterplatte zu verbinden. Für eine derartige Steckkarte ist der Steckverbinder für jede Art der Steckerbuchsenanordnung und deren relative Lage zur Leiterplatte insgesamt gesondert herzustellen und konstruktiv anzupassen. Desweiteren ist der Isolations-Formstoffkörper aus der Wärme im Lötofen widerstehenden Kunststoffmaterial herzustellen.

Eine Steckkarte für elektronische Geräte nach dem Oberbegriff des Anspruchs 1 ist aus der US 5 513 074 A bekannt geworden. Bei dieser Steckkarte ist das Sattelbauteil mit seinem Fixierbereich längs der Seitenränder der halbschalenartigen Gehäuseteile zum fluchtenden Ausrichten der Gehäuseteile vor deren Verbinden eingebracht. Dies führt zu einer nicht unverschieblichen Lage des Sattelbauteils am betreffenden Gehäuseteil während deren Montage.

Aufgabe der vorliegenden Erfindung ist es deshalb, bei einer Steckkarte für elektronische Geräte der eingangs genannten Art einerseits für einen vereinfachten Steckverbinder für die Steckkartenstirnseite und andererseits für eine sichere Vormontage des Steckverbinders an einem der beiden Gehäuseteile zu sorgen.

Zur Lösung dieser Aufgabe sind bei einer Steckkarte für elektronische Geräte der eingangs genannten Art die im Anspruch 1 angegebenen Merkmale vorgesehen.

Durch die erfindungsgemäßen Maßnahmen ist erreicht, dass mit Hilfe des Sattelbauteils unterschiedlich geartete Steckverbinder aufnehmbar sind und das Sattelbauteil für weitere Montagevorcänge in einfacher Weise am Gehäuse gehalten werden kann. Ein weiterer Vorteil besteht darin, dass für das Sattelbauteil ein kostengünstigerer Kunststoff verwendet werden kann, da dieser nicht aus hitzebeständigem Material zu sein braucht, da dessen Montage erst nach dem lötenden Befestigen des Steckverbinders an der Leiterplatte erfolgt.

Das ortsfeste Halten des Sattelbauteils an einem der Gehäuseteile erfolgt mittels einer mechanischen Verklemmung, was positionsgenau hergestellt werden kann und auf Dauer haltbar ist.

Mit den Merkmalen des Anspruchs 2 und denen des Anspruchs 3 und/oder 4 ist eine einfache und sichere Montage des Steckverbinders am Sattelbauteil erreicht.

Eine weitere bevorzugte Ausgestaltung ergibt sich durch die Merkmale des Anspruchs 5.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: in teilweise abgebrochener, schematischer, auseinandergezogener und perspektivischer Darstellung eine mit einem erfindungsgemäßen Steckverbinder versehene Steckkarte für elektronische Geräte gemäß einem bevozugten Ausführungsbeispiel vorliegender Erfindung,
- Figur 2: in perspektivischer Darstellung ein Sattelbauteil des gemäß Figur 1 verwendeten Steckverbinders,
- Figur 3: in vergrößerter ausschnittsweiser Darstellung die Verbindung zwischen Sattelbauteil und unterem Gehäuseteil und
- Figur 4: in perspektivischer und teilweise abgebrochener Darstellung die zusammengebaute Steckkarte jedoch ohne oberem Gehäuseteil.

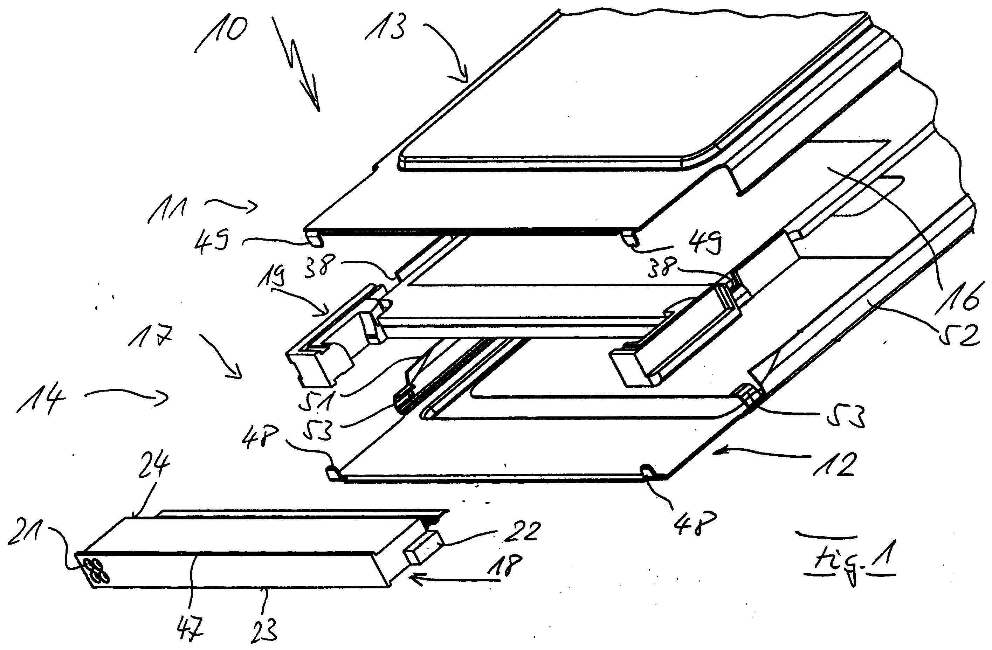

Wie in Figur 1 dargestellt, besitzt die für die Verwendung bei elektronischen Geräte geeignete Steckkarte 10 ein länglich rechteckiges und sehr flaches Gehäuse 11, das aus einem unteren Gehäuseteil 12 und einem damit längsrandseitig verrastend verbundenen oberen Gehäuseteil 13 zusammengesetzt ist. Zwischen den beiden Gehäuseteilen 12 und 13 ist eine Einheit 14 angeordnet und fixiert gehalten, die eine in nicht dargestellter Weise mit elektronischen Bauteilen bestückte Leiterplatte 16 und an mindestens einem Querende der Leiterplatte 16 angeordnet eine mit der Leiterplatte 16 verbundenen Steckverbinder 17, umfasst.

Der Steckverbinder 17 ist zweiteilig ausgebildet, d.h., er besteht aus einem hier 68-poligen, leistenförmigen Steckbauteil 18 und einem Sattelbauteil 19. Das leistenförmige Steckbauteil 18 aus Kunststoff besitzt in bekannter Weise und in der Zeichnung nicht im Einzelnen ausgeführt eine Vielzahl Durchgangsbohrungen 21, durch die nicht dargestellte Kontaktlaschen gesteckt sind, die einenends innerhalb des Steckbauteils 18 als Steckerbuchsen und anderenends als mit entsprechenden Kontakten der Leiterplatte 16 zu verlötenden Kontaktfinger ausgebildet sind. An den beiden schmalen Seitenstirnflächen ist das Steckbauteil 18 jeweils mit einem vorstehenden rechteckförmigen Zapfen 22 versehen, dessen Querschnitt kleiner ist als der des Speckbauteils 18 und dessen entsprechende Flächen mit der Unterseite 23 bzw. mit der langgestreckten Innenstirn 24 des Steckbauteils 18 fluchten.

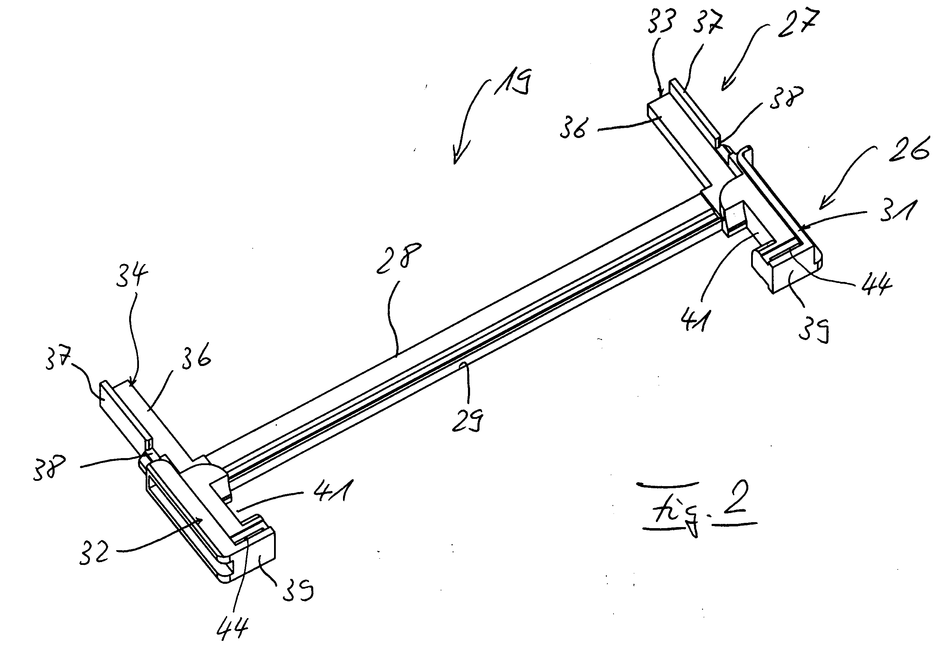

Das einstückig aus Kunststoff bestehende Sattelbauteil 19 besitzt gemäß Figur 2 einen Haltebereich 26 für das Steckbauteil 18 und einen Fixierbereich 27, mit dem es am Gehäuse 11 ortsfest und lagegenau gehalten ist. Zwischen dem Haltebereich 26 und dem Fixierbereich 27 ist ein Auflagesteg 28 angeordnet. Das Sattelbauteil 19 besitzt somit eine im Wesentlichen doppel-T-artige Form, indem sowohl der Haltebereich 26 als auch der Fixierbereich 27 aus jeweils zwei parallelen Haltestegen 31 und 32 bzw. Fixierstegen 33 und 34 besteht. Dabei sind die Haltestege 31 und 32 und die Fixierstege 33 und 34 jeweils unter sich spiegelbildlich identisch ausgebildet.

Die Haltestege 31 und 32 des Haltebereichs 26 besitzen im Querschnitt L-Form, wobei der horizontale Schenkel 36 in einer Ebene mit dem Auflagesteg 28 liegt. Der vertikale Schenkel 37 besitzt angrenzend an den Fixierbereich 27 eine nutartige Aussparung 38, die bis zur Oberseite des horizontalen Schenkels 36 reicht. Die Länge der von oben offenen Aussparung 38 entspricht der Dicke des vertikalen Schenkels 37.

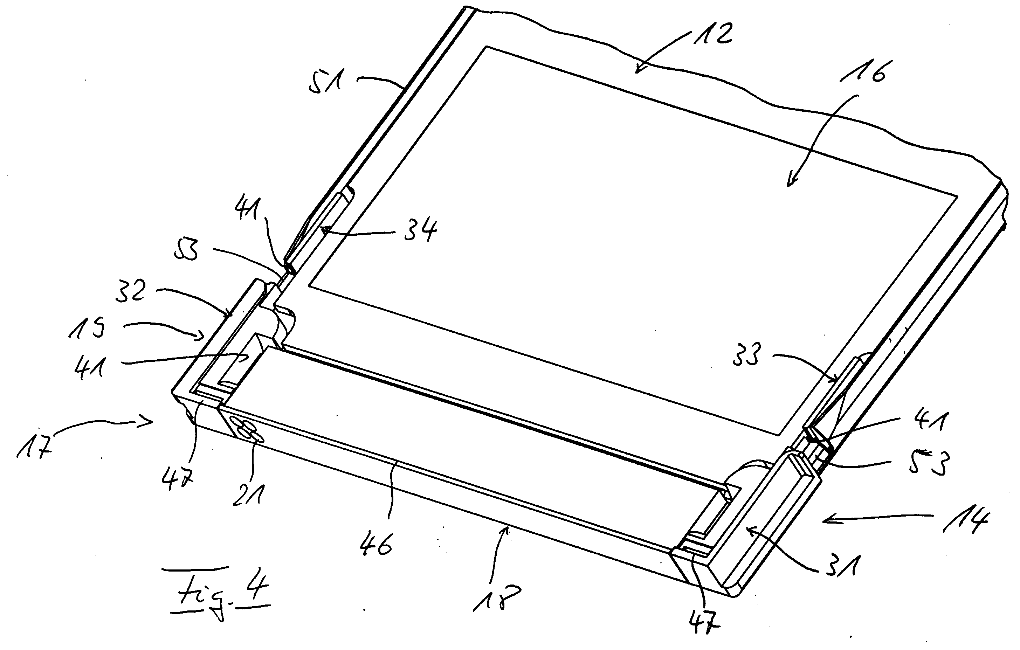

Die Fixierstege 33 und 34 des Fixierbereichs 27 sind in Draufsicht gesehen etwa U-förmig. Die dadurch gebildeten Ausnehmungen 41, die einander zugewandt offen sind, dienen der Aufnahme der Zapfen 22 des Steckbauteils 18. Die Dicke der Fixierstege 33 und 34 entspricht der Dicke des Steckbauteils 18 und die lichte Weite der Fixierstege 33 und 34 zwischen ihrem Außenrand 39 und dem zugewandten Innenrand 29 des Auflagestegs 28 entspricht der Breite des Steckbauteils 18. Damit ist, wie aus Figur 4 ersichtlich, das Steckbauteil 18 im Sattelbauteil 19 formschlüssig derart aufgenommen, dass die Ober- und Unterseite und die Endstirnfläche des Sattelbauteils 19 mit den betreffenden Flächen des Steckbauteils 18 fluchten.

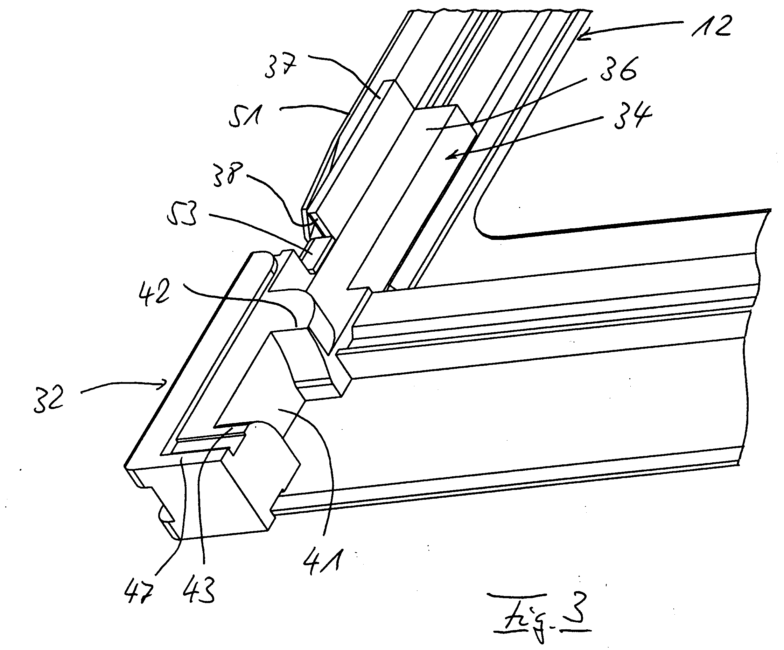

Gemäß Figur 3 besitzen die einander gegenüberliegenden Begrenzungswände 42 und 43 der Ausnehmung 41 im Haltesteg 31, 32 Einführungsschrägen, die bei der Begrenzungswand 42 konkav gewölbt und bei der Begrenzungswand 43 konvex gewölbt verlaufen und die im unteren Bereich, in welchem die Zapfen 22 des Steckbauteils 18 gelagert sind, parallel verlaufen. Die Haltestege 31 und 32 sind ferner mit einem Schlitz 44 zur Aufnahme eines umgebogenen Lappens 48, 49 am unteren bzw. oberen Gehäuseteil 12, 13 (Figur 1) versehen.

Für die fluchtende Aufnahme der Gehäuseteile 12 und 13 sind Steckbauteil 18 und Sattelbauteil 19 mit einem entsprechend der Dicke der metallischen Gehäuseteile 12, 13 erhabenen Rand 46, 47 versehen.

Zur Montage der Steckkarte 10 wird das Sattelbauteil 19 auf das untere Gehäuseteil 12 gebracht, dessen Lappen 48 in die Schlitze 44 greifen und dessen Seitenränder 51, 52 den Fixierbereich 27 des Sattelbauteils 19 parallel liegend übergreifen. Jeder Seitenrand 51, 52 des unteren Gehäuseteils 12 besitzt im Bereich der nutartigen Aussparungen 38 des Haltebereichs 26 des Sattelbauteils 19 ausgeklinkte Fixierlappen 53, die zur positiongenauen Montage in die nutartige Aussparung 38 eingebogen wird, so dass sich eine seitlich und axial fixierte klemmende Verbindung zwischen unterem Gehäuseteil 12 und Sattelbauteil 19 ergibt. Dann wird das mit der Leiterplatte 16 lötend verbundene Steckbauteil 18 mit seinem Zapfen 22 in die Ausnehmungen 41 des Fixierbereichs 27 des Sattelbauteils 19 gebracht und die Leiterplatte 16 mit ihrem betreffenden Endbereich auf die Auflageflächen von Auflagesteg 28 und horizontalem Schenkel 36 gelegt, wobei die Leiterplatte 16 in Querrichtung zwischen den vertikalen Schenkeln 37 der Fixierstege 33 und 34 gehalten ist. Es versteht sich, dass es auch möglich ist, zuerst die Einheit 10 aus Leiterplatte 16, Steckbauteil 18 und Sattelbauteil 19 zu montieren und dann mit dem unteren Gehäuseteil 12 klemmend zu verbinden. Danach wird das obere Gehäuseteil 13 über das untere Gehäuseteil 12 mit den betreffenden Seitenrändern verrastend gebracht.

Gemäß einer nicht dargestellten Variante kann der Fixierbereich 27 des Sattelbauteils 19 statt in klemmender in klebender Weise mit dem unteren Gehäuseteil 12 verbunden sein.

## Patentansprüche

1. Steckkarte (10) für elektronische Geräte, in etwa länglich rechteckiger, flacher Form, mit einem zwei halbschalenartig ausgebildete Gehäuseteile (12, 13) aufweisenden Gehäuse (11), mit einer im Gehäuse (11) aufgenommenen Leiterplatte (16) und mit einem an einem der oder beiden Querenden der Leiterplatte (16) gehaltenen Steckverbinder (17), der die Stirnseitenöffnung des Gehäuses (11) abdeckt und die Gehäuseteile (12, 13) auf Abstand hält und der desweiteren durch getrennte Bauteile in Form mindestens eines an der Leiterplatte (16) gehaltenen Steckbauteils (18) und eines das Steckbauteil (18) formschlüssig haltenden, elektrisch isolierenden Sattelbauteils (19) gebildet ist, **dadurch gekennzeichnet,** dass ein dem Haltebereich (26) für das Steckbauteil (18) abgewandter Fixierbereich (27) des Sattelbauteils (19) an einem der Gehäusteile (12, 13) derart ortsfest mechanisch verklemmt gehalten ist, dass der Haltebereich (26) des Sattelbauteils (19) ein- oder beidseitig mit einer Aussparung (38) versehen und ein aus dem Seitenrand (51, 52) des einen Gehäuseteils (12, 13) ausgeklinkter Lappen (53) in die Aussparung (38) eingebogen ist.

2. Steckkarte nach Anspruch 1, dadurch gekennzeichnet, dass der Haltebereich (26) des Sattelbauteils (19) zwei parallele Außenfinger (31, 32) aufweist, die von den schmalen Stirnseiten des Steckbauteils (18) vorstehende Zapfen (22) umgreifen.

3. Steckkarte nach Anspruch 2, dadurch gekennzeichnet, dass der Finger (31, 32) eine zum gegenüberliegenden Finger weisende U-förmige Aufnahme (41) besitzt, die von einer zur Leiterplattenebene parallelen Ebene aus mit einer Einführungsschräge oder -rundung (42, 43) versehen ist.

4. Steckkarte nach Anspruch 3, dadurch gekennzeichnet, dass die einander gegenüberliegenden Einführungsrundungen (42, 43) eines Fingers (31, 32) gegenläufig konkav bzw. konvex sind.

5. Steckkarte nach mindestens einem der vorhergehenden Ansprüche, dadurch gekennzeichnet, dass das Sattelbauteil (19) an einer Stelle etwa zwischen Haltebereich (26) und Fixierbereich (27) einen quer verlaufenden Auflagesteg (28) besitzt.
